(19) Europäisches Patentamt

European Patent Office

Office européen des brevets

(11) **EP 1 273 344 B1**

(12) **EUROPÄISCHE PATENTSCHRIFT**

(45) Veröffentlichungstag und Bekanntmachung des Hinweises auf die Patenterteilung:
**31.08.2005  Patentblatt 2005/35**

(51) Int Cl.⁷: **B01J 37/02**, B01J 35/04, C04B 41/81

(21) Anmeldenummer: **01115981.1**

(22) Anmeldetag: **30.06.2001**

(54) **Verfahren zum Beschichten eines Tragkörpers**

Process for the coating of a support

Procédé de revêtement d'un support

(84) Benannte Vertragsstaaten:
**AT BE CH CY DE DK ES FI FR GB GR IE IT LI LU MC NL PT SE TR**

(43) Veröffentlichungstag der Anmeldung:
**08.01.2003  Patentblatt 2003/02**

(73) Patentinhaber: **Umicore AG & Co. KG**
**63457 Hanau-Wolfgang (DE)**

(72) Erfinder:
• **Kiessling, Ralph, Dr.**
**79618 Rheinfelden (DE)**
• **Harris, Michael**
**64839 Münster (DE)**

• **Detterbeck, Dieter**
**63755 Alzenau (DE)**
• **Piroth, Josef**
**63875 Mespelbrunn (DE)**

(74) Vertreter: **Vossius & Partner**
**Postfach 86 07 67**
**81634 München (DE)**

(56) Entgegenhaltungen:
**EP-A- 0 672 454        EP-A- 0 941 763**
**WO-A-01/10573        US-A- 4 609 563**
**US-A- 5 866 210**

**Beschreibung**

Die Erfindung betrifft ein Verfahren zum Beschichten eines zylindrischen Tragkörpers mit einer Beschichtungssuspension. Insbesondere betrifft die Erfindung ein Verfahren zum Beschichten von Tragkörpern für Katalysatoren - zum Beispiel Autoabgaskatalysatoren.

Die Tragkörper für Autoabgaskatalysatoren besitzen eine zylindrische Form mit zwei Stirnflächen und einer Mantelfläche und werden von der ersten Stirnfläche zur zweiten Stirnfläche von einer Vielzahl von parallel zur Zylinderachse liegenden Strömungskanälen für die Abgase der Verbrennungskraftmaschinen durchzogen. Diese Tragkörper werden auch als Wabenkörper bezeichnet.

Die Querschnittsform der Tragkörper hängt von den Einbauerfordernissen am Kraftfahrzeug ab. Weit verbreitet sind Tragkörper mit rundem Querschnitt, elliptischem oder dreieckförmigem Querschnitt. Die Strömungskanäle weisen meist einen quadratischen Querschnitt auf und sind in einem engen Raster über den gesamten Querschnitt der Tragkörper angeordnet. Je nach Anwendungsfall variiert die Kanal- beziehungsweise Zelldichte der Strömungskanäle zwischen 10 und 140 $cm^{-2}$. Wabenkörper mit Zelldichten bis zu 250 $cm^{-2}$ und mehr sind in der Entwicklung.

Für die Reinigung der Autoabgase werden überwiegend Katalysator-Tragkörper eingesetzt, die durch Extrusion keramischer Massen gewonnen werden. Alternativ dazu stehen Katalysator-Tragkörper aus gewellten und gewickelten Metallfolien zur Verfügung. Für die Abgasreinigung von Personenkraftwagen werden heute noch überwiegend keramische Tragkörper mit Zelldichten von 62 $cm^{-2}$ eingesetzt. Die Querschnittsabmessungen der Strömungskanäle betragen in diesem Fall 1,27 x 1,27 $mm^2$. Die Wandstärken solcher Tragkörper liegen zwischen 0,1 und 0,2 mm.

Zur Umsetzung der in Autoabgasen enthaltenen Schadstoffe wie Kohlenmonoxid, Kohlenwasserstoffe und Stickoxide in unschädliche Verbindungen werden zumeist feinstverteilte Platingruppenmetalle eingesetzt, die durch Verbindungen von Unedelmetallen in ihrer katalytischen Wirkung verändert sein können. Diese katalytisch aktiven Komponenten müssen auf den Tragkörpern abgeschieden werden. Allerdings ist es nicht möglich, die geforderte feinste Verteilung der katalytisch aktiven Komponenten durch Abscheidung dieser Komponenten auf den geometrischen Oberflächen der Tragkörper zu gewährleisten. Dies gilt in gleicher Weise für die unporösen metallischen wie auch für die porösen keramischen Tragkörper. Eine ausreichend große Oberfläche für die katalytisch aktiven Komponenten kann nur durch Aufbringen einer Trägerschicht aus feinteiligen, hochoberflächigen Materialien auf die Innenflächen der Strömungskanäle zur Verfügung gestellt werden. Dieser Vorgang wird im folgenden als Beschichten des Tragkörpers bezeichnet. Die Beschichtung der äußeren Mantelfläche der Tragkörper ist unerwünscht und sollte zur Vermeidung von Verlusten an wertvollen, katalytisch aktiven Materialien vermieden werden.

Zum Beschichten der Tragkörper dient eine Suspension aus den feinteiligen, hochoberflächigen Materialien in einer flüssigen Phase, zumeist Wasser. Typische Beschichtungssuspensionen für katalytische Anwendungen enthalten als hochoberflächige Trägermaterialien für die katalytisch aktiven Komponenten zum Beispiel aktive Aluminiumoxide, Aluminiumsilicate, Zeolithe, Siliciumdioxid, Titanoxid, Zirkonoxid und Sauerstoff speichernde Komponenten auf der Basis von Ceroxid. Diese Materialien bilden den Feststoffanteil der Beschichtungssuspension. Darüber hinaus können der Beschichtungssuspension noch lösliche Vorstufen von Promotoren oder katalytisch aktiven Edelmetallen der Platingruppe des periodischen Systems der Elemente zugefügt werden. Die Feststoffkonzentration typischer Beschichtungssuspensionen liegt im Bereich zwischen 20 und 65 Gew.-%, bezogen auf das Gesamtgewicht der Suspension. Sie weisen Dichten zwischen 1,1 und 1,8 kg/l auf.

Aus dem Stand der Technik sind verschiedene Verfahren zur Abscheidung der Trägerschicht auf den Tragkörpern unter Verwendung der Beschichtungssuspension, beziehungsweise Aufschlämmung, bekannt. Zur Beschichtung können die Tragkörper zum Beispiel in die Beschichtungssuspension getaucht oder mit der Beschichtungssuspension übergossen werden. Weiterhin besteht die Möglichkeit, die Beschichtungssuspension in die Kanäle der Tragkörper zu pumpen oder einzusaugen. In allen Fällen muß überschüssiges Beschichtungsmaterial durch Absaugen oder Ausblasen mit Preßluft aus den Kanälen der Tragkörper entfernt werden. Hierdurch werden auch eventuell mit Beschichtungssuspension verstopfte Kanäle geöffnet.

Nach dem Beschichten werden Tragkörper und Trägerschicht getrocknet und anschließend zur Verfestigung und Fixierung der Trägerschicht auf dem Tragkörper calciniert. Anschließend werden die katalytisch aktiven Komponenten in die Beschichtung durch Imprägnieren mit zumeist wässrigen Lösungen von Vorläuferverbindungen der katalytisch aktiven Komponenten eingebracht. Alternativ hierzu können die katalytisch aktiven Komponenten auch schon der Beschichtungssuspension selbst zugefügt werden.

Ein nachträgliches Imprägnieren der fertiggestellten Trägerschicht mit den katalytisch aktiven Komponenten entfällt in diesem Fall.

Ein wesentliches Kriterium der Beschichtungsverfahren ist die mit ihnen in einem Arbeitsgang erreichbare Beschichtungs- oder Beladungskonzentration. Hierunter wird der Feststoffanteil verstanden, der nach Trocknen und Calcinieren auf dem Tragkörper zurückbleibt. Die Beschichtungskonzentration wird in Gramm pro Liter Volumen der Tragkörper angegeben (g/l). In der Praxis werden Beschichtungskonzentrationen bei Autoabgaskatalysatoren bis zu 300 g/l benötigt. Kann diese Menge mit dem verwendeten Verfahren nicht in einem Arbeitsgang aufgebracht werden, so muß der Beschichtungsvorgang nach dem Trocknen und gegebenenfalls Calcinieren des Tragkörpers so oft wiederholt werden, bis die gewünschte Beladung erreicht ist. Häufig werden zwei oder mehrere Beschichtungsvorgänge mit unterschiedlich zusammengesetzten Beschichtungssuspensionen vorgenommen. Hierdurch werden Katalysatoren erhalten, die mehrere übereinanderliegende Schichten mit unterschiedlichen katalytischen Funktionen aufweisen.

Ein weiteres Kriterium für die Güte einer Beschichtung ist ihre Gleichmäßigkeit sowohl in radialer als auch in axialer Richtung des Tragkörpers. Besonders störend sind Ungleichmäßigkeiten in axialer Richtung, da sie bei hohen Sollbeladungen der Tragkörper zu nicht mehr tolerierbaren Druckverlusten führen können.

Die DE 40 40 150 C2 beschreibt ein Verfahren, mit dem Katalysator-Tragkörper in Wabenform über ihre gesamte Länge gleichmäßig mit einer Trägerschicht, beziehungsweise mit einer katalytisch aktiven Schicht, beschichtet werden können. Im folgenden werden Katalysator-Tragkörper in Wabenform auch als Wabenkörper bezeichnet. Gemäß dem Verfahren der DE 40 40 150 C2 wird die Zylinderachse des Wabenkörpers zur Beschichtung vertikal ausgerichtet. Dann wird die Beschichtungssuspension durch die untere Stirnfläche des Wabenkörpers in die Kanäle eingepumpt, bis sie an der oberen Stirnfläche austritt. Danach wird die Beschichtungssuspension wieder nach unten abgepumpt und überschüssige Beschichtungssuspension aus den Kanälen durch Ausblasen oder Absaugen entfernt, um ein Verstopfen der Kanäle zu vermeiden. Mit diesem Verfahren werden Trägerschichten erhalten, die über die gesamte Länge der Wabenkörper eine gute Gleichmäßigkeit aufweisen.

Die US 4,550,034 und US 4,609,563 beschreiben ein Verfahren zum Beschichten von keramischen Wabenkörpern, wobei eine vorherbestimmte Menge einer Beschichtungssuspension in ein flaches Gefäß eingefüllt und der zu beschichtende Wabenkörper mit einer seiner Stirnflächen in die Suspension getaucht wird. Die vorherbestimmte Menge der Beschichtungssuspension entspricht der Soll-Beschichtungsmenge für den Wabenkörper. Anschließend wird durch Anlegen eines Vakuums an die zweite Stirnfläche die gesamte Menge der Beschichtungssuspension in die Strömungskanäle des Wabenkörpers eingesaugt. Da die vorherbestimmte Menge der Beschichtungssuspension der Soll-Beschichtungsmenge für den Wabenkörper entspricht, erfolgt nach dem Einsaugen der Beschichtungssuspension kein Entfernen von überschüssiger Beschichtungssuspension aus den Strömungskanälen. Bevorzugt wird die Beschichtung in zwei Schritten vorgenommen, wobei in einem ersten Schritt 50 bis 85% der benötigten Beschichtungsmenge von der ersten Stirnfläche und die restliche Beschichtungsmenge von der zweiten Stirnfläche des Wabenkörpers in die Strömungskanäle eingesaugt wird.

Das von diesen beiden Patentschriften beschriebene Verfahren weist eine hohe Reproduzierbarkeit der Beschichtungskonzentration auf. Allerdings zeigen die so hergestellten Katalysatoren einen starken Gradienten der Dicke der Beschichtung längs des Wabenkörpers. Auch die bevorzugte Beschichtung des Wabenkörpers in zwei Schritten verbessert die Gleichmäßigkeit der Beschichtung längs des Wabenkörpers nicht ausreichend.

Für bestimmte Anwendungsfälle werden Katalysatoren benötigt, die längs des Katalysator-Tragkörpers unterschiedliche katalytisch aktive Bereiche aufweisen. So beschreibt die EP 0 410 440 B 1 einen Katalysator, welcher aus zwei Teilkatalysatoren besteht - einem anströmseitigen Katalysator für die selektive katalytische Reduktion von Stickoxiden mittels Ammoniak oder einer Ammoniak spendenden Verbindung und einem abströmseitigen Oxidationskatalysator, wobei der Oxidationskatalysator als Beschichtung auf einem abströmseitigen Abschnitt des einstückigen als Vollextrudat in Wabenform ausgeführten Reduktionskatalysators aufgebracht ist und der abströmseitige Abschnitt 20 bis 50% des gesamten Katalysatorvolumens ausmacht. Die Aufbringung des Oxidationskatalysators erfolgt durch Eintauchen der Abströmseite des Wabenkörpers bis zur gewünschten Länge in die Beschichtungssuspension für den Oxidationskatalysator.

Die DE 195 47 597 C2 und DE 195 47 599 C2 beschreiben die Verstärkung der Stirnflächen von monolithischen Katalysatoren für die Abgasreinigung durch Auf- oder Einbringen von anorganischen Stoffen, die die mechanischen Eigenschaften der Tragkörper oder der katalytischen Beschichtung verstärken. Die Länge der verstärkten Zone beträgt ausgehend von der jeweiligen Stirnfläche bis zum zwanzigfachen des Kanaldurchmessers. Zur Durchführung dieser Beschichtung wird vorgeschlagen, die Katalysatorkörper in eine Suspension der verstärkenden Stoffe einzutauchen oder diese Suspension auf die Stirnflächen der Körper aufzuspritzen.

Die US 5,866,210 beschreibt ein Verfahren zum teilweisen Beschichten von Wabenkörpern, beziehungsweise Tragkörpern. Zum Beschichten wird das Substrat mit einer Stirnfläche in ein Bad mit der Beschichtungssuspension getaucht. Das Bad enthält die Beschichtungssuspension im Überschuss zu der Menge, welche benötigt wird, um das Substrat bis zu einer gewünschten Höhe zu beschichten. Dann wird an die zweite Stirnfläche ein Unterdruck angelegt, dessen Intensität und Zeitdauer genügt, um die Beschichtungssuspension in den Kanälen bis in die gewünschte Höhe zu saugen. Dabei wird eine möglichst gleiche Beschichtungshöhe in allen Kanälen angestrebt.

Das Verfahren gemäß der US 5,866,210 hat mehrere erhebliche Nachteile. Die Höhe der Beschichtung, beziehungsweise ihre axiale Länge, wird durch Ausnutzung von Kapillarkräften und die Höhe des angelegten Unterdruckes und durch die Zeitdauer bestimmt, während der der Unterdruck an die zweite Stirnfläche des Tragkörpers angelegt wird. Für diese Zeitdauer werden 1 bis 3 Sekunden angegeben. Änderungen der Viskosität der Beschichtungssuspension führen damit zu direkten Änderungen der Länge der aufgebrachten Beschichtung. Die Höhe des Unterdrucks wird in der US-Patentschrift mit maximal einem Zoll Wassersäule angegeben, was etwa 2,5 mbar entspricht. Die genaue Regelung dieses geringen Unterdruckes ist ebenfalls schwierig und kann zu weiteren Problemen bei der Reproduzierbarkeit des Beschichtungsverfahrens führen. Wegen des geringen Unterdruckes können mit diesem Verfahren nur Beschichtungssuspensionen mit niedriger Viskosität verarbeitet werden, was bedeutet, daß diese Suspensionen in der Regel nur einen geringen Feststoffgehalt aufweisen. Der geringe Feststoffgehalt hat wiederum zur Folge, daß zur Aufbringung einer hohen Beladungskonzentration mehrere Beschichtungen nacheinander vorgenommen werden müssen.

In dem Verfahren gemäß der US 5,866,210 spielen die Kapillarkräfte eine wesentliche Rolle. Dies macht das Verfahren abhängig von der Zelldichte der zu beschichtenden Tragkörper.

Es ist Aufgabe der vorliegenden Erfindung ein Verfahren zur Beschichtung von Tragkörpern anzugeben, mit welchem Beschichtungssuspensionen mit hohem Feststoffgehalt eingesetzt werden können und daß eine gute Gleichmäßigkeit der Beschichtungsdicke in axialer Richtung des Tragkörpers gewährleistet.

Diese Aufgabe wird gelöst durch ein Verfahren zum Beschichten eines zylindrischen Tragkörpers mit einer vorgegebenen Menge (Sollaufnahme) einer Beschichtungssuspension, wobei der Tragkörper eine Zylinderachse, zwei Stirnflächen, eine Mantelfläche und eine axiale Länge L aufweist und von der ersten Stirnfläche zur zweiten Stirnfläche von einer Vielzahl von Kanälen durchzogen ist. Das Verfahren umfaßt die folgenden Verfahrensschritte:

a) vertikales Ausrichten der Zylinderachse des Tragkörpers und Füllen des Leervolumens der Kanäle von der unteren Stirnfläche ausgehend bis zu einer vorgegebenen Füllhöhe $H_1$,

b) Entfernen überschüssiger Beschichtungssuspension durch die untere Stirnfläche des Tragkörpers bis auf Sollaufnahme für diesen Beschichtungsschritt,

c) Drehen des Tragkörpers um 180°, so daß obere und untere Stirnfläche gegeneinander vertauscht werden,

d) Wiederholen der Schritte a) und b), wobei die Füllhöhe $H_2$, bis zu der die Kanäle in diesem Fall gefüllt werden durch $H_2 = L - x \cdot H_1$ mit x zwischen 0,8 bis 1,0 gegeben ist.

Das vorgeschlagene Verfahren beinhaltet also zwei Beschichtungsschritte oder Beschichtungen, die von den sich gegenüberliegenden Stirnflächen des Tragkörpers in die Kanäle eingebracht werden.

Unter Sollaufnahme wird im Rahmen dieser Erfindung diejenige Menge an Beschichtungssuspension verstanden, die nach Beendigung der Beschichtung auf dem Tragkörper verbleiben soll. Da das Verfahren zwei Beschichtungsschritte umfaßt, muß zwischen der Sollaufnahme für den ersten und zweiten Beschichtungsschritt unterschieden werden. Beide Werte zusammen ergeben die Sollaufnahme für den gesamten Beschichtungsvorgang.

Charakteristisch für das Verfahren ist, daß die Kanäle bei jedem Beschichtungsschritt bis zur jeweiligen Beschichtungshöhe vollständig mit Beschichtungssuspension gefüllt werden. Die Beschichtungssuspension wird also im Gegensatz zu den aus dem Stand der Technik bekannten Verfahren im Überschuß angewendet. Überschüssige Beschichtungssuspension wird jeweils durch die untere Stirnfläche aus den Kanälen entfernt. Diese Vorgehensweise hat zum Beispiel bei der Beschichtung von keramischen Wabenkörpern den Vorteil, daß das Saugvermögen der porösen Keramik für die wäßrige Phase der Beschichtungssuspension nur einen geringen Einfluß auf die Feststoffkonzentration der Beschichtungssuspension während der Füllung der Kanäle ausübt. Dies wirkt sich positiv auf die axiale Gleichmäßigkeit der Beschichtungsdicke aus. Eine weitere Verbesserung wird dadurch erzielt, daß die überschüssige Beschichtungssuspension nach unten - also entlang der schon mit der Beschichtungssuspension in Kontakt stehenden Kanalwänden - entfernt wird. Hierdurch erfolgt eine weitere Nivellierung der Beschichtungsdicke in axialer Richtung.

Würde dagegen gemäß dem Stand der Technik nur genau eine Menge der Beschichtungssuspension angewendet werden, die der benötigten Beschichtungsstärke entspricht, so würde beim Hochsteigen der Beschichtungssuspension in den Kanälen durch das Saugvermögen des Tragkörpers eine zunehmende Konzentrierung der Beschichtungssuspension stattfinden. Ein so beschichteter Tragkörper weist nach den Erfahrungen der Erfinder längs der Kanäle eine mit zunehmender Entfernung von der Stirnfläche anwachsende Beschichtungsdicke auf. Dieser Effekt kann zwar durch zwei Teilbeschichtungen von jeder Stirnfläche des Tragkörpers im gewissen Umfang gemildert werden, ist aber für viele Anwendungen in der Autoabgaskatalyse nicht tolerierbar.

Eine weitere Verbesserung der Gleichmäßigkeit der Beschichtungsstärke wird im erfindungsgemäßen Verfahren dadurch erzielt, daß die Geschwindigkeit, mit der die Beschichtungssuspension in den Tragkörper eingebracht wird, so bemessen wird, daß die jeweils gewünschte Beschichtungshöhe in weniger als einer Sekunde erreicht wird und das Entfernen der überschüssigen Beschichtungssuspension unmittelbar nach Erreichen der Beschichtungshöhe erfolgt. Dadurch wird der Einfluß des Saugvermögens der keramischen Katalysatorkörper auf die Beschichtungssuspension verringert.

Aus dem Füllvolumen der Beschichtungssuspension, die dem Leervolumen der Kanäle bis zur gewünschten Beschichtungshöhe entspricht, ergibt sich die in die Kanäle des Tragkörpers eingebrachte Füllmenge durch Multiplikation mit der Dichte der Beschichtungssuspension. Von der Füllmenge ist die gewünschte Beschichtungsmenge (Soll-Beschichtungsmenge oder Sollaufnahme) zu unterscheiden, die sich erst nach dem Entfernen überschüssiger Beschichtungssuspension aus den Kanälen des Tragkörpers ergibt. Die in den Tragkörper eingebrachte Menge der Beschichtungssuspension ist also stets größer als die Beschichtungsmenge.

Folgendes Beispiel verdeutlicht diesen Sachverhalt: Ein Wabenkörper mit einem Volumen von 1,5 Litern und einer Zelldichte von 62 $cm^{-2}$ wird in einem ersten Beschichtungsschritt ausgehend von einer Stirnfläche bis zur Hälfte seiner Länge beschichtet. Das Leervolumen des Wabenkörpers (Volumen aller Kanäle) beträgt 2/3 des Gesamtvolumens, das heißt 1 Liter. Folglich beträgt das Füllvolumen bis zur halben Länge des Wabenkörpers 0,5 Liter. Für die Beschichtung wird eine Beschichtungssuspension mit einer Dichte von 1,5 kg/l und einem Feststoffgehalt von 50 Gew.-% eingesetzt. Daraus berechnet sich mit dem benötigten Füllvolumen eine Füllmenge von 750 g. Nach dem Entfernen der überschüssigen Beschichtungssuspension verbleibt auf dem Tragkörper eine Beschichtungsmenge (Sollaufnahme) von 200 g, die nach Calcinierung eine Trokkenmasse von 100 g ergibt. Die Sollaufnahme von 200 g beträgt also nur einen Bruchteil der Füllmenge von 750 g.

Das Füllen des Leervolumens der Kanäle des Tragkörpers bis zu den Füllhöhen $H_1$ und $H_2$ mit der Beschichtungssuspension wird mit Hilfe eines Dosierorgans volumetrisch, gravimetrisch oder mittels eines Sensors gesteuert vorgenommen. Als Dosierorgan eignen sich zum Beispiel eine Pumpe oder ein Ventil. Soll die Dosierung volumetrisch vorgenommen werden, so kann zum Beispiel eine Dosierpumpe verwendet werden, wobei das gepumpte Volumen durch eine Zeitsteuerung der Pumpe oder durch die Anzahl der Pumpvorgänge bemessen wird. Zur gravimetrischen Dosierung kann ein Massendurchflußmesser eingesetzt werden. Der Massendurchflußmesser steuert dann das Dosierorgan, das heißt die Pumpe oder das Dosierventil. Eine besonders vorteilhafte Dosierung ist möglich, wenn der Tragkörper aus Keramik gefertigt ist. Dann kann zum Beispiel ein kapazitiver Sensor seitlich am Mantel des Tragkörpers in der gewünschten Beschichtungshöhe über der unteren Stirnfläche angebracht werden. Mit dem Signal des kapazitiven Sensors wird das Dosierorgan gesteuert. Alternative Sensoranordnungen zur Ermittlung der Beschichtungshöhe können natürlich ebenfalls eingesetzt werden, wobei besonders optische Sensoren vorteilhafte Lösungen ermöglichen.

Das Entfernen der überschüssigen Beschichtungssuspension aus den Kanälen des Tragkörpers erfolgt bis zur gewünschten Sollaufnahme, die also stets geringer sein muß als die in die Kanäle eingebrachte Füllmenge. Verfahrensschritt b), das heißt das Entfernen überschüssiger Beschichtungssuspension bis auf Sollaufnahme, kann in einem Arbeitsgang durch Absaugen oder Ausblasen vorgenommen werden. Wird dagegen die überschüssige Beschichtungssuspension zunächst grob mit einer Pumpe aus den Strömungskanälen herausgepumpt, so muß sich daran das Absaugen oder Ausblasen bis auf Sollaufnahme anschließen. In diesem Fall spaltet sich also Verfahrensschritt b) in zwei Teilschritte auf. Im ersten Teilschritt wird die überschüssige Beschichtungssuspension grob abgepumpt. Im zweiten Teilschritt wird die Sollaufnahme durch Absaugen oder Ausblasen eingestellt.

Nach dem Entfernen der überschüssigen Beschichtungssuspension in Schritt d) wird die Beschichtung getrocknet und gegebenenfalls calciniert. Die Trocknung wird im allgemeinen bei erhöhter Temperatur zwischen 80 und 200 °C für die Dauer von 5 Minuten bis 2 Stunden vorgenommen. Die Calcinierung erfolgt gewöhnlich bei Temperaturen zwischen 300 und 600 °C für die Dauer von 10 Minuten bis 5 Stunden. Die Calcinierung bewirkt eine gute Fixierung der Beschichtung auf dem Tragkörper und überführt eventuelle Vorläuferverbindungen in der Beschichtungssuspension in ihre endgültige Form.

Bei der Beschichtung von Schritt d) wird die Beschichtungshöhe so gewählt, daß sie entweder genau dem im ersten Schritt noch nicht beschichteten Teil des Tragkörpers entspricht oder die vorhergehende Beschichtung um bis zu 20 % der Gesamtlänge des Tragkörpers überlappt. Da die erste Beschichtung bei der zweiten Beschichtung noch im feuchten Zustand ist, führt diese Überlappung nicht zu einer wesentlichen Verdikkung der Beschichtungsstärke im Überlappungsbereich. Darüber hinaus wird die überschüssige Beschichtungssuspension abschließend abgepumpt beziehungsweise abgesaugt oder ausgeblasen wird.

Für gewisse Anwendungen kann es allerdings vorteilhaft sein, nach Schritt b) eine Zwischentrocknung bei erhöhter Temperatur vorzunehmen, das heißt die erste Beschichtung vor dem Aufbringen der zweiten Beschichtung zu trocknen. Dies ist insbesondere dann vorteilhaft, wenn für die zweite Beschichtung (Schritt d)) eine Beschichtungssuspension mit einer anderen Zusammensetzung und Funktion als für. Schritt a) verwendet wird.

Das Verfahren wird an Hand der Figuren 1 bis 4 näher erläutert. Es zeigen:

Figur 1: Vorrichtung zur Durchführung des Verfahrens mit einer Dosierpumpe und Absaugen der überschüssigen Beschichtungssuspension

Figur 2: Beschichtungsvorrichtung mit Wabenkörper nach Beendigung des ersten Füllvorganges

Figur 3: Beschichtungsvorrichtung mit Wabenkörper nach Entfernen der überschüssigen Beschichtungssuspension, jedoch vor Ausblasen oder Absaugen des Wabenkörpers auf Sollaufnahme

Figur 4: Schematische Darstellung des Ausblasens des Wabenkörpers auf Sollaufnahme

Figur 5: Schematische Darstellung des Absaugens des Wabenkörpers auf Sollaufnahme

Figur 6: Vorrichtung zur Durchführung des Verfahrens mit einer reversierbaren Dosierpumpe

Figur 7: Vorrichtung zur Durchführung des Verfahrens mit einem Dosierventil und einer Pumpe zum Abpumpen der überschüssigen Beschichtungssuspension

Figur 8: Vorrichtung zur Durchführung des Verfahrens mit einem Dosierventil und Absaugen der überschüssigen Beschichtungssuspension

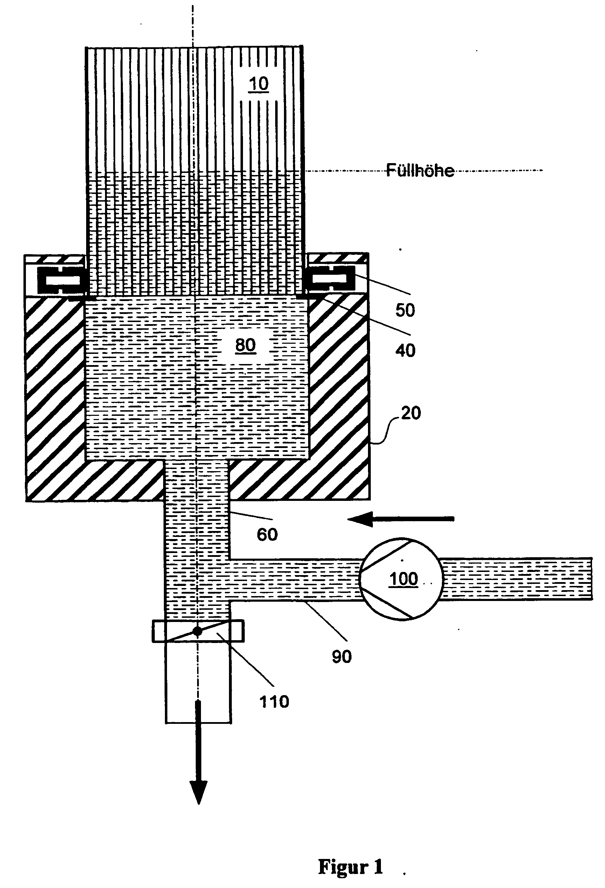

Mit dem Verfahren können sowohl keramische als auch metallische Tragkörper beschichtet werden. Figur 1 zeigt eine mögliche Apparatur zur Durchführung des Verfahrens.

Die Beschichtungsvorrichtung besteht aus einer Beschichtungsstation (20), auf der der zu beschichtende Tragkörper (10) auf den dafür vorgesehenen Halteelementen (40) abgesetzt wird. Durch Aufblasen der aufblasbaren Gummimanschette (50) wird der Tragkörper auf der Station fixiert und abgedichtet. Als Dosierorgan zum Einbringen der Beschichtungssuspension in die Kanäle des Tragkörpers dient eine Dosierpumpe (100), die die Beschichtungssuspension (80) aus einem hier nicht gezeigten Vorratsgefäß über die Rohrleitungen (90) und (60) von unten in den Tragkörper pumpt. Die Füllhöhen $H_1$ und $H_2$ werden durch Einpumpen entsprechender Volumina der Beschichtungssuspension mit Hilfe der Dosierpumpe festgelegt.

Die überschüssige Beschichtungssuspension wird durch Öffnen der Drosselklappe (110) aus den Kanälen des Tragkörpers durch Absaugen entfernt. Hierzu ist Rohrleitung (60) mit einem hier nicht gezeigten Unterdruckgefäß mit Demister verbunden.

Durch Verwenden von zwei getrennten Rohrleitungen für das Befüllen und Entleeren des Tragkörpers kann in einfacher Weise ein Kreislauf für die Beschichtungssuspension geschaffen werden. Das Unterdruckgefäß ist mit einem Gebläse verbunden, welches einen Unterdruck zwischen 50 und 500, bevorzugt 300 mbar aufrecht erhält. Intensität und Dauer des Absaugens können mit Hilfe der Drosselklappe eingestellt werden. Sie bestimmen unter anderem die auf dem Tragkörper verbleibende Beschichtungsmenge, das heißt die Sollaufnahme. Außerdem dient dieser Vorgang dazu, eventuell durch überschüssige Beschichtungssuspension verstopfte Kanäle zu Öffnen.

Anschließend wird die Gummimanschette (50) gelöst und der Tragkörper um 180° gedreht und mit seiner zweiten Stirnfläche auf der Beschichtungsstation abgesetzt. Danach wird der Beschichtungsvorgang wiederholt, wobei die Beschichtungshöhe $H_2$ entsprechend der Beziehung

$$H_2 = L - x \cdot H_1$$

mit x zwischen 0,8 bis 1,0 gewählt wird.

In dem soeben beschriebenen Fall wird ein und dieselbe Beschichtungsstation für beide Beschichtungsschritte verwendet. Zur Verdopplung des Durchsatzes kann natürlich für den zweiten Beschichtungsschritt eine zweite Beschichtungsstation vorgesehen werden. In diesem Fall wird der Tragkörper während des Transportes von der ersten Beschichtungsstation zur zweiten Beschichtungsstation um 180° gedreht.

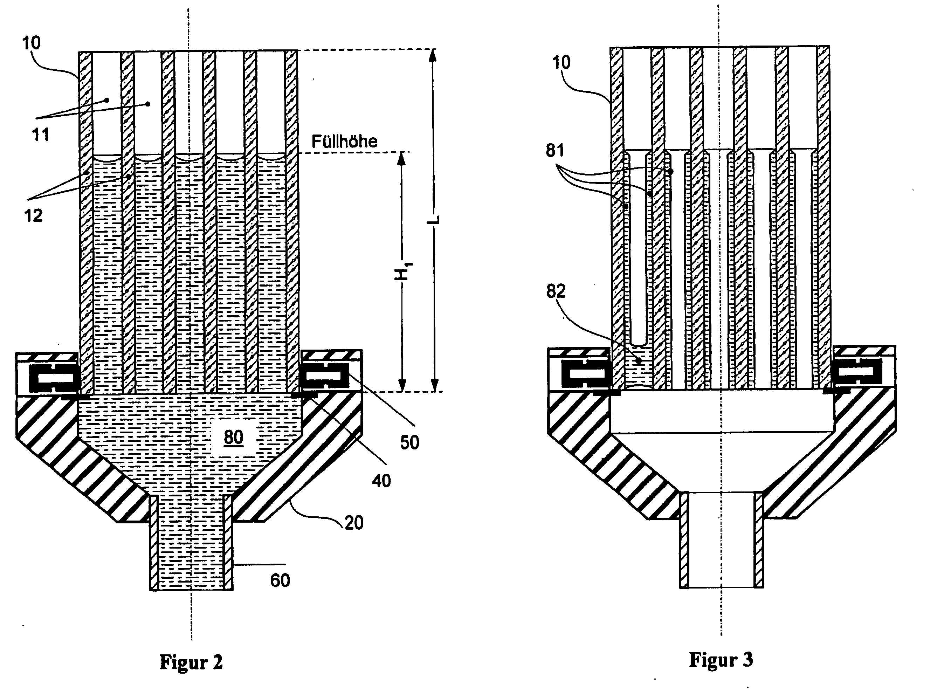

Die Figuren 2 bis 5 dienen zur Erläuterung der im Rahmen dieser Erfindung verwendeten Begriffe Füllhöhe, Füllvolumen und Sollaufnahme. Figur 2 zeigt eine Beschichtungsvorrichtung mit einem keramischen Wabenkörper der Länge L nach Beendigung des ersten Füllvorganges. Bezugsziffer (11) bezeichnet die Kanäle des Wabenkörpers und Bezugsziffer (12) die Trennwände zwischen den Kanälen. Der Wabenkörper (10) ist bis zur gewünschten Füllhöhe $H_1$ durch die untere Stirnfläche hindurch mit der Beschichtungssuspension (80) gefüllt worden. Die Füllhöhe ist der Abstand von der unteren Stirnfläche des Wabenkörpers bis zur Höhe des Flüssigkeitsspiegels in den Kanälen. Das Füllvolumen entspricht dem Leervolumen der Kanäle von der unteren Stirnfläche bis zur Füllhöhe $H_1$. Die Füllmenge, beziehungsweise Füllmasse, ergibt sich durch Multiplikation des Füllvolumens mit der Dichte der Beschichtungssuspension.

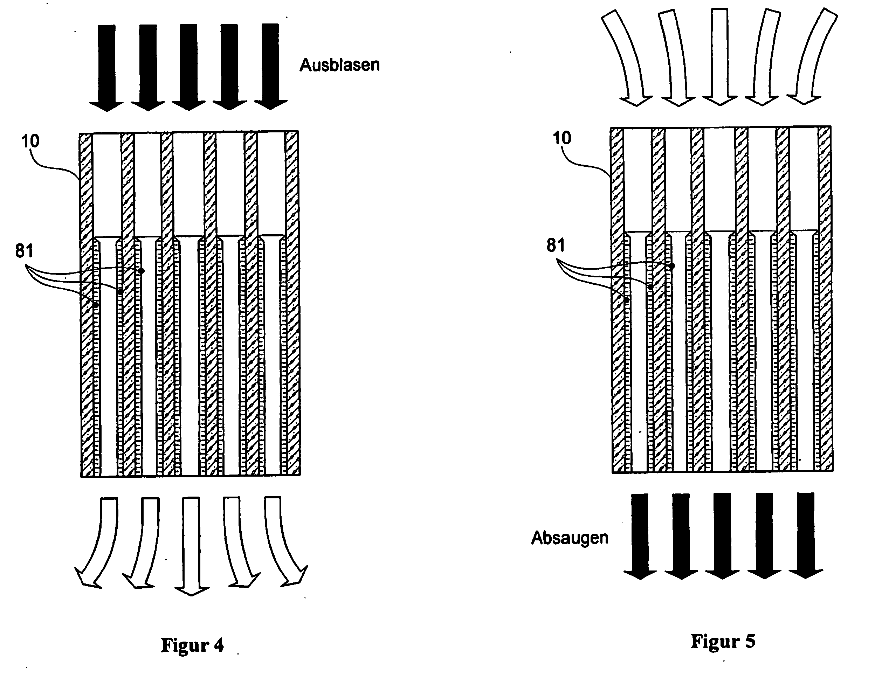

Figur 3 zeigt die Situation nach Entfernen der überschüssigen Beschichtungssuspension durch die untere Stirnfläche. Auf den Kanalwänden bleibt die Beschichtung (81) zurück. (82) bezeichnet eine unerwünschte Verstopfung eines der Kanäle. Zur Öffnung von eventuell verstopften Kanälen und zur Einstellung der Beschichtungsmenge auf die gewünschte Sollaufnahme wird der Wabenkörper nach dem Entleeren entweder mit Preßluft ausgeblasen oder einem Absaugvorgang unterworfen. Dies ist schematisch in Figur 4 (Ausblasen) und Figur 5 (Absaugen) dargestellt. Die Stärke des Ausblasens oder Absaugens und die Dauer dieses Vorganges bis die Sollaufnahme erreicht ist, kann vom Fachmann in wenigen Vorversuchen ermittelt werden.

Nach dem Absaugen oder Ausblasen verbleibt auf den Kanalwänden nur noch die Beschichtung (81), deren Beschichtungsmenge der gewünschten Sollaufnahme entspricht. Wie der Vergleich von Figur 2 mit Figur 4 oder Figur 5 zeigt, ist die Sollaufnahme, das heißt die auf den Kanalwänden verbleibende Menge der Beschichtungssuspension, wesentlich geringer als die Füllmenge.

In der Beschichtungsvorrichtung nach Figur 1 erfolgt das Entfernen überschüssiger Beschichtungssuspension aus den Kanälen des Tragkörpers bis auf die Sollaufnahme in einem Arbeitsgang durch Absaugen der Beschichtungssuspension nach unten.

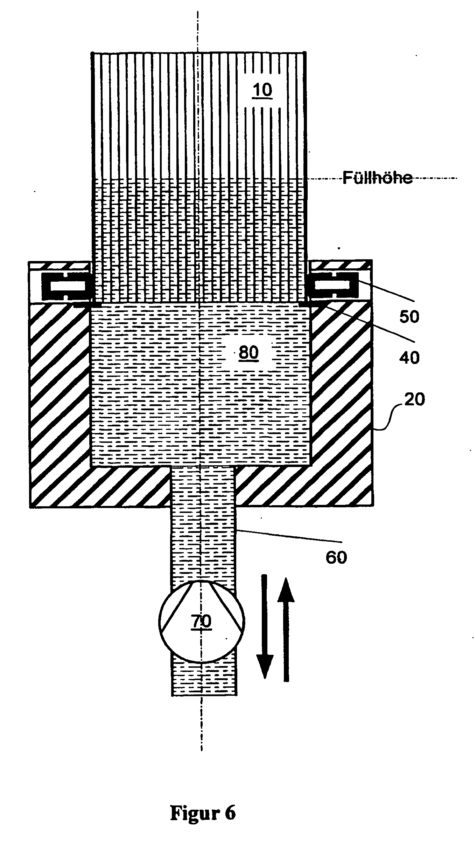

Die Apparatur von Figur 6 ist für eine alternative Verfahrensführung ausgelegt. Das Befüllen und Entleeren erfolgt jetzt nur über die Rohrleitung (60) mit Hilfe einer reversierbaren Dosierpumpe (70). Die Beschichtungssuspension wird mit Hilfe der Dosierpumpe (70) in die Kanäle des Tragkörpers eingepumpt. Die Festlegung der Beschichtungshöhen erfolgt also auch hier mit Hilfe der Dosierpumpe. Die überschüssige Beschichtungssuspension wird durch Umkehren der Pumprichtung der Pumpe aus den Kanälen entfernt. Anschließend wird der Tragkörper aus der Beschichtungsstation entnommen und die Sollaufnahme in einer anderen Bearbeitungsstation durch Absaugen oder Ausblasen (siehe Figuren 4 und 5) eingestellt. Danach wird der Tragkörper um 180 ° gedreht und auf einer zweiten Beschichtungsstation zur Durchführung des zweiten Beschichtungsschrittes abgesetzt.

Eine verbesserte Reproduzierbarkeit der Beschichtungshöhe läßt sich erreichen, wenn das Füllvolumen mit Hilfe eines Dosierventils bemessen wird, an dessen Eingang die Beschichtungssuspension unter einem Druck ansteht. Das Dosierventil wird aufgrund des Signals eines Sensors gesteuert. Das Signal des Sensors meldet das Erreichen der gewünschten Beschichtungshöhe und steuert das Schließen des Dosierventils. Überschüssige Beschichtungssuspension kann wieder durch Abpumpen oder Absaugen aus den Kanälen des Tragkörpers entfernt werden.

Die bisher beschriebenen Verfahrensvarianten eignen sich sowohl für Tragkörper aus Keramik als auch für Tragkörper aus Metallfolien. Eine besonders vorteilhafte Ausführungsform bei Verwendung von Sensoren zur Festlegung der Beschichtungshöhe ist für Tragkörper aus Keramik möglich. Das Erreichen der Beschichtungshöhe kann in diesem Fall sehr einfach und genau mit Hilfe eines kapazitiven Sensors gemeldet werden, der in der gewünschten Höhe über der unteren Stirnfläche des Tragkörpers in einem Abstand zur Mantelfläche des Tragkörpers angeordnet ist. Kapazitive Sensoren werden in großem Umfang in der Technik als Näherungsschalter eingesetzt. Der kapazitive Sensor kann in der gewünschten Höhe in einem Abstand von der Mantelfläche des Tragkörpers angeordnet werden. Steigt die Beschichtungssuspension in den Strömungskanälen bis auf diese Höhe, so spricht der Sensor an. Die Ansprechgenauigkeit hängt von der Änderung der Dielektrizitätskonstanten ab. Wird eine wässrige Suspension verwendet, so ist die Ansprechgenauigkeit sehr hoch, da sich in diesem Fall die Dielektrizitätskonstante von 1 (Luft) auf etwa 80 (Wasser) ändert. Die erzielbaren Abschaltgenauigkeiten sind mit einer solchen Sensoranordnung ausgezeichnet.

Der Abstand zwischen der Mantelfläche und dem Sensorkopf sollte im Bereich zwischen 0,5 und 25 mm liegen. Der Tragkörper darf dabei nicht durch eine zwischen der Mantelfläche und dem Sensor liegende Metallfläche abgeschirmt werden. Es empfiehlt sich in diesem Fall, die Halterung für den Tragkörper aus einem Kunststoff zu fertigen. In Versuchen hat sich gezeigt, daß noch außerordentlich gute Abschaltgenauigkeiten erzielt werden, wenn der Abstand zwischen der Mantelfläche des Tragkörpers und dem Sensorkopf 15 mm beträgt. Eine zwischen Mantelfläche und Sensorkopf eingefügte Kunstoffwand hat auf die Abschaltgenauigkeit keinen Einfluss. Diese Tatsache gibt dem Fachmann einen großen Spielraum bei der Konstruktion einer geeigneten Beschichtungsstation zur Durchführung des Verfahrens.

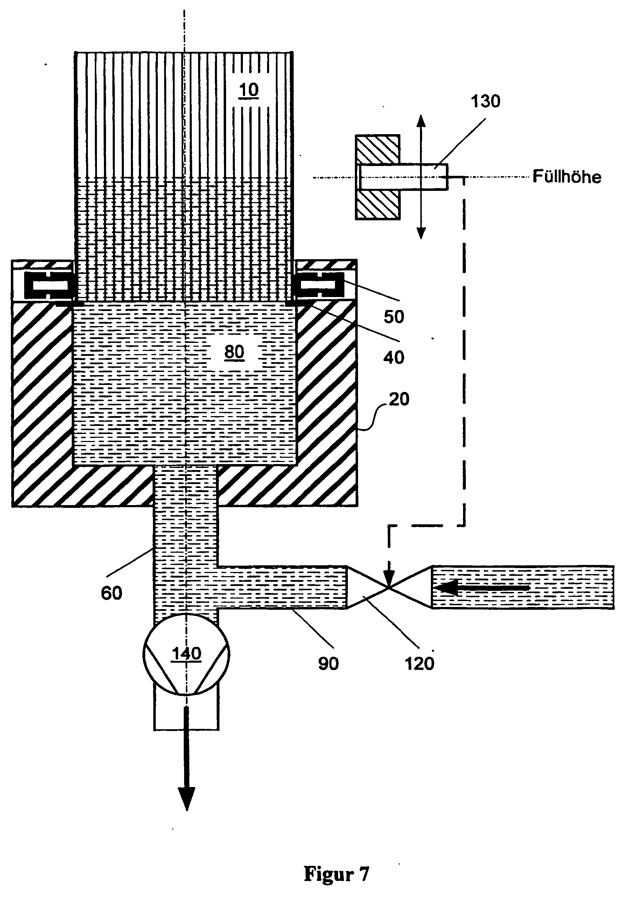

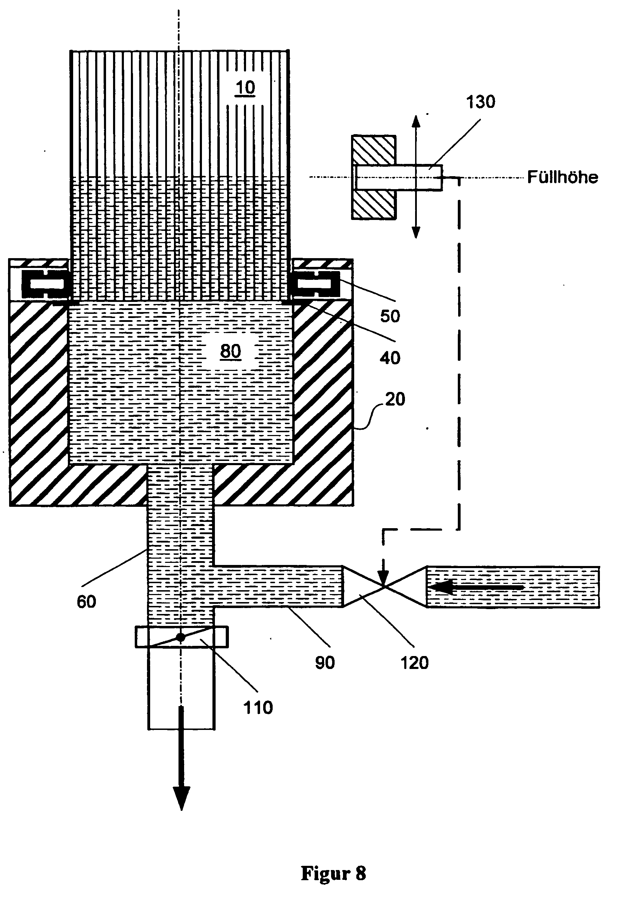

Eine mögliche Apparatur zur Durchführung dieser Verfahrensvariante zeigen die Figuren 7 und 8. In die Rohrleitung (90) ist jetzt ein Dosierventil (120) eingefügt. In der gewünschten Beschichtungshöhe über der Auflage (40) ist der kapazitive Sensor (130) befestigt, der meldet, wenn die Beschichtungssuspension in den Strömungskanälen bis zu dieser Höhe gestiegen ist. Der Sensor ist über eine geeignete Steuerungselektronik mit dem Dosierventil (120) verbunden. Meldet der Sensor das Erreichen der Beschichtungshöhe, so schließt die Elektronik das Dosierventil und schaltet die Pumpe (140) zum Auspumpen der überschüssigen Beschichtungssuspension ein (Figur 7) oder öffnet die Drosselklappe (110), welche wie in Figur 1 mit einem Unterdruckgefäß zum Absaugen der Beschichtungssuspension aus den Kanälen des Tragkörpers verbunden ist (Figur 8).

Gemäß dem vorgeschlagenen Verfahren wird die Beschichtungssuspension von unten in den Tragkörper zwangsweise eingeführt. Das Befüllen wird erst beendet, wenn die vorgesehene Beschichtungshöhe erreicht ist. Das macht das Verfahren weitgehend unabhängig von der Viskosität der Suspension. Damit können auch hochviskose Beschichtungssuspensionen mit einem hohen Feststoffgehalt eingesetzt werden, so daß die notwendige Beschichtungsdicke mit nur einem Beschichtungsvorgang möglich wird. Die Viskosität der Beschichtungssuspension kann bis 1000 mPa·s betragen. Es können Suspensionen mit einem Feststoffgehalt bis 65 Gew.-% verarbeitet werden. Bevorzugt werden Beschichtungssuspensionen mit einem Feststoffgehalt zwischen 40 und 55 Gew.-% eingesetzt. In der Regel ist nur ein Beschichtungsvorgang pro katalytisch aktiver Schicht notwendig, um Beschichtungskonzentrationen nach Calcinierung von bis zu 200 g/l des beschichteten Tragkörpervolumens aufzubringen.

**Patentansprüche**

1. Verfahren zum Beschichten eines zylindrischen Tragkörpers mit einer vorgegebenen Menge (Sollaufnahme) einer Beschichtungssuspension, wobei der Tragkörper eine Zylinderachse, zwei Stirnflächen, eine Mantelfläche und eine axiale Länge L aufweist und von der ersten Stirnfläche zur zweiten Stirnfläche von einer Vielzahl von Kanälen durchzogen ist, wobei das Verfahren die folgenden Schritte umfaßt:

   a) vertikales Ausrichten der Zylinderachse des Tragkörpers und Füllen des Leervolumens der Kanäle von der unteren Stirnfläche ausgehend bis zu einer vorgegebenen Füllhöhe $H_1$,
   b) Entfernen überschüssiger Beschichtungssuspension durch die untere Stirnfläche des Tragkörpers bis auf Sollaufnahme für diesen Beschichtungsschritt,
   c) Drehen des Tragkörpers um 180°, so daß obere und untere Stirnfläche gegeneinander vertauscht werden,
   d) Wiederholen der Schritte a) und b), wobei die Füllhöhe $H_2$, bis zu der die Kanäle in diesem Fall gefüllt werden, durch $H_2 = L - x \cdot H_1$ mit x zwischen 0,8 bis 1,0 gegeben ist.

2. Verfahren nach Anspruch 1, wobei das Füllen des Leervolumens der Kanäle bis zu den Füllhöhen $H_1$ und $H_2$ **dadurch** erfolgt, daß die Beschichtungssuspension mit Hilfe eines Dosierorgans volumetrisch, gravimetrisch oder mittels eines Sensors gesteuert vorgenommen wird.

3. Verfahren nach Anspruch 2, wobei als Dosierorgan eine Pumpe oder ein Ventil eingesetzt wird.

4. Verfahren nach Anspruch 1, wobei das Entfernen der überschüssigen Beschichtungssuspension bis auf Sollaufnahme durch Absaugen oder Ausblasen in einem Arbeitsgang vorgenommen wird.

5. Verfahren nach Anspruch 1, wobei das Entfernen der überschüssigen Beschichtungssuspension durch Abpumpen vorgenommen wird und die Sollaufnahme anschließend durch Ausblasen oder Absaugen eingestellt wird.

6. Verfahren nach einem der Ansprüche 1 bis 5, wobei der Tragkörper aus Keramik oder Metall gefertigt ist.

7. Verfahren nach Anspruch 6, wobei der Tragkörper aus Keramik gefertigt ist und für jede Beschichtungshöhe ein kapazitiver Sensor verwendet wird, welche in den gewünschten Höhen $H_1$ und $H_2$ über der unteren Stirnfläche in einem Abstand zur Mantelfläche des Tragkörpers angeordnet sind.

8. Verfahren nach Anspruch 1, wobei die Geschwindigkeit, mit der die Beschichtungssuspension in den Tragkörper eingebracht wird, so bemessen wird, daß die jeweils gewünschte Beschichtungshöhe in weniger als einer Sekunde erreicht wird.

9. Verfahren nach Anspruch 1, wobei die Beschichtung nach Schritt d) bei erhöhter Temperatur getrocknet und zur Fixierung der Beschichtung auf dem Tragkörper bei Temperaturen zwischen 300 und 600 °C calciniert wird.

10. Verfahren nach Anspruch 9, wobei nach Schritt b) eine Zwischentrocknung bei erhöhter Temperatur vorgenommen wird.

11. Verfahren nach Anspruch 1, wobei für Schritt d) eine Beschichtungssuspension mit einer anderen Zusammensetzung als für Schritt a) verwendet wird.

**Claims**

1. A method for the coating of a cylindrical support with a predetermined amount (target take-up) of a coating suspension, wherein the support has a cylinder axis, two end faces, an encasing surface and an axial length L and a plurality of channels running from the first end face to the second end face, wherein the method comprises the following steps:

   a) vertically aligning of the cylinder axis of the support and filling of the void volume of the channels starting from the lower end face up to a predetermined filling height $H_1$,
   b) removing of excess coating suspension through the lower end face of the support down to the target take-up for this coating step,
   c) turning the support by 180° so that the upper and lower end faces are mutually exchanged, d) repeating of steps a) and b), wherein the filling height $H_2$ up to which the channels are filled in this case is given by $H_2 = L - x \cdot H_1$, wherein x is between 0.8 and 1.0.

2. The method according to Claim 1, wherein the filling of the void volume of the channels up to the filling heights $H_1$ and $H_2$ is carried out by regulating the filling with the coating suspension with the aid of a metering device volumetrically, gravimetrically or by means of a sensor.

3. The method according to Claim 2, wherein a pump or a valve is used as the metering device.

4. The method according to Claim 1, wherein the removing of the excess coating suspension down to the target take-up is carried out in one work step by sucking off or blowing out.

5. The method according to Claim 1, wherein the removing of the excess coating suspension is carried out by pumping off and the target take-up is subsequently adjusted to by blowing out or sucking off.

6. The method according to any one of Claims 1 to 5, wherein the support is made of ceramic or metal.

7. The method according to Claim 6, wherein the support is made of ceramic and a capacitive sensor which is located at the desired heights $H_1$ and $H_2$ above the lower end face and at a distance from the encasing surface of the support is used for each coating height.

8. The method according to Claim 1, wherein the rate at which the coating suspension is introduced into the support is such that the coating height desired in each case is attained within less than one second.

9. The method according to Claim 1, wherein after step d) the coating is dried at elevated temperature and is calcined at temperatures between 300 and 600°C to fix the coating to the support.

10. The method according to Claim 9, wherein after step b) an intermediate drying at elevated temperature is carried out.

11. The method according to Claim 1, wherein a coating suspension having a different composition than the one used in step a) is used in step d).

**Revendications**

1. Procédé pour revêtir un support cylindrique à l'aide d'une quantité prédéfinie (absorption exigée) d'une suspension de revêtement, le support présentant un axe de cylindre, deux surfaces frontales, une surface latérale et une longueur axiale L et étant traversé par un grand nombre de canaux depuis la première surface frontale jusqu'à la deuxième surface frontale, dans le quel de procédé comprend les étapes suivantes:

   a) l'axe de cylindre du support est orienté verticalement et le volume vide des canaux est rempli à partir de la surface frontale inférieure jusqu'à une hauteur de remplissage $H_1$ prédéfinie,
   b) la suspension de revêtement excédentaire est retirée par la surface frontale inférieure du support jusqu'à l'absorption exigée pour cette étape de revêtement,
   c) le support est tourné de 180° de sorte que la surface frontale supérieure et la surface frontale inférieure prennent la place l'une de l'autre,
   d) les étapes a) et b) sont répétées, on obtient dans ce cas la hauteur de remplissage $H_2$ jusqu'à laquelle les canaux sont remplis par $H_2 = L - x * H_1$, x étant compris entre 0,8 et 1,0.

2. Procédé selon la revendication 1, dans lequel le volume vide des canaux est rempli jusqu'aux hauteurs de remplissage $H_1$ et $H_2$ en réalisant le remplissage avec la suspension de revêtement à l'aide d'un organe de dosage pour ce qui est de la volumétrie ou de la gravimétrie ou de façon commandée à l'aide d'un capteur.

3. Procédé selon la revendication 2, dans lequel une pompe ou une soupape sert d'organe de dosage.

4. Procédé selon la revendication 1, dans lequel la suspension de revêtement excédentaire est retirée jusqu'à l'absorption exigée par aspiration ou par soufflage au cours d'une opération.

5. Procédé selon la revendication 1, dans lequel la suspension de revêtement excédentaire est retirée par pompage et l'absorption exigée est ensuite réglée par aspiration ou par soufflage.

6. Procédé selon l'une des revendications 1 à 5, dans lequel le support est fabriqué en céramique ou en métal.

7. Procédé selon la revendication 6, dans lequel le support est fabriqué en céramique et un capteur capacitif est utilisé pour chaque hauteur de revêtement, les deux étant placés aux hauteurs $H_1$ et $H_2$

souhaitées au-dessus de la surface frontale inférieure à distance de la surface latérale du support.

8. Procédé selon la revendication 1, dans lequel la vitesse à laquelle la suspension de revêtement est introduite dans le support est établie de telle manière que chacune des hauteurs de revêtement souhaitées est obtenue en moins d'une seconde.

9. Procédé selon la revendication 1, dans lequel le revêtement est séché après l'étape d) à une température plus élevée et, pour le fixer sur le support, il est calciné à des températures comprises entre 300 et 600 °C.

10. Procédé selon la revendication 9, dans lequel après l'étape b) on réalise un séchage intermédiaire à température plus élevée.

11. Procédé selon la revendication 1, dans lequel on utilise à l'étape d) une suspension de revêtement dont la composition est différente de celle de l'étape a).

**Figur 1**

Figur 3

Figur 2

Figur 5

Absaugen

Ausblasen

Figur 4

**Füllhöhe**

10

50

40

20

80

60

70

**Figur 6**

**Figur 7**

**Figur 8**

10

130

Füllhöhe

50

40

20

80

60

90

120

110